# EUROPÄISCHE PATENTSCHRIFT

(11) **EP 2 252 504 B1**
(45) Veröffentlichungstag und Bekanntmachung des Hinweises auf die Patenterteilung: **19.12.2012**
(21) Anmeldenummer: 09717217.5
(22) Anmeldetag: 16.02.2009
(51) Int. Cl.: B64C 1/14

(54) **RUMPFSTRUKTUR FÜR FLUGZEUG**
FUSELAGE STRUCTURE FOR AIRPLANE
STRUCTURE DE FUSELAGE POUR AVION

(30) Priorität: 03.03.2008 DE 102008012282
(43) Veröffentlichungstag der Anmeldung: 24.11.2010
(73) Patentinhaber: Airbus Operations GmbH, 21129 Hamburg (DE)
(72) Erfinder: DITTMAR, Volker, 26125 Oldenburg (DE); ROHDE, Jens, 28201 Hamburg (DE); BRUNKEN, Renke, 26316 Varrel (DE); LANGE, Matthias, 26349 Jaderberg (DE)
(74) Vertreter: UEXKÜLL & STOLBERG
(86) Internationale Anmeldenummer: PCT/EP2009/051778
(87) Internationale Veröffentlichungsnummer: WO 2009/109456

(56) Entgegenhaltungen:
- WO-A-2008/096087
- DE-A1- 10 112 413
- US-A- 2 473 616
- US-A1- 2006 060 705

## Beschreibung

Die Erfindung bezieht sich auf die Rumpfstruktur eines Flugzeugs, dessen Druckkabine mehrere Sicht- und/oder Durchgangsöffnungen aufweist. Insbesondere, aber nicht ausschließlich betrifft die Erfindung eine Rumpfstruktur für ein Flugzeug nach dem Oberbegriff von Anspruch 1.

Die Rumpfstruktur eines Flugzeuges besteht im wesentlichen aus einer Hülle oder Außenhaut, die mit Querspanten (auch Spant genannt) und Längsspanten (auch Stringer genannt) auf ihrer Innenseite versteift wird. Insbesondere bei einer Druckkabine unterliegt die Hülle des Flugzeugs neben den Belastungen durch Flugzeugbewegungen auch Belastungen durch Druckschwankungen, die durch den Unterschied zwischen Reiseflughöhe und Bodendruck entstehen. Insgesamt wird die Außenhaut dadurch einer Vielzahl von Belastungswechseln unterworfen. Die Hauptbelastung der Hülle tritt dabei in Umfangsrichtung auf, so dass insbesondere die Querspante diese Kräfte aufnehmen müssen. Daher laufen bei den heutigen Flugzeugrümpfen die Querspante über den gesamten Umfang des Rumpfes, ohne dass sie an einer Stelle unterbrochen werden.

Ein solcher Flugzeugrumpf ist beispielsweise in der DE3900167 offenbart. Der Rumpf des Luftfahrzeugs nach diesem Stand der Technik stellt eine Schale dar, die durch längs- und querverlaufende Kraftelemente verstärkt ist. Die Schale besteht aus einem ununterbrochenen Außenteil und einem Innenteil, die ganzflächig kraftübertragend miteinander verbunden sind, wobei der Innenteil die Form des Außenteils hat und ein Gitterstruktur besitzt, deren Stege entlang der Kraftelemente liegen.

Einen anderen kritischen Bereich des Rumpfes stellen die Abschnitte dar, in denen sich die Kabinenfenster befinden. Infolge der durch die Fenster bedingten Ausschnitte in der Rumpfhülle wird der tragende Hautquerschnitt an diesen Stellen reduziert, so dass entsprechende Verstärkungen erforderlich werden. Bei bekannten Flugzeugen der eingangs genannten Art sind die Nähte stets außerhalb der Fensterbereiche angeordnet. Dies bedeutet andererseits, dass Sicht- oder Durchgangsöffnungen wie Fenster immer zwischen zwei Querspante gelegt werden müssen. Dadurch sind die Möglichkeiten bzgl. der Anordnung der Fenster eingeschränkt, und die Fenster sollten eine bestimmte Größe nicht überschreiten, die durch den Abstand zweier benachbarter Querspante vorgegeben ist. Möglichkeiten zur Einsparung von Kosten und Gewicht werden nicht genutzt.

Aus WO 20081096087 A ist ein Flugzeugrumpfabschnitt bekannt, der Rahmen und Aussparungen für die Aufnahme von Kabinenfenstem aufweist. Wenigstens einige der Rahmen umfassen wenigstens ein Rahmensegment, das wenigstens eine Aussparung umschließt, wobei das Rahmensegments zwei Elemente aufweist, die seitlich der Aussparung angeordnet sind. Die Enden der Elemente sind jeweils miteinander verbunden, so dass sich eine Y-förmige Struktur ergibt.

Der Erfindung liegt damit die Aufgabe zugrunde, die Rumpfhalle eines Flugzeugs derart zu gestalten, dass sowohl Größe als auch Anordnung von Sicht- oder Durchtrittsöffnungen in der Rumpfhülle frei und flexibel gewählt werden können.

Diese Aufgabe wird erfindungsgemäß durch die Rumpfstruktur mit den Merkmalen nach Anspruch 1 gelöst. Bevorzugte Ausführungsformen sind Gegenstand der Unteransprüche.

Der Erfindung liegt der Gedanke zugrunde, die Fensterrahmen als Teil der Verstärkungen gegen Durchbiegung der Rumpfstruktur zu verwenden und einen Teil der Umfangskräfte um die Fensteröffnungen herumzuleiten. Damit wird eine optimale Lasteinleitung bzw. Krafteinleitung in die Rumpfstruktur erreicht.

Die erfindungsgemäße Rumpfstruktur eines Flugzeugs mit einer Außenhaut, die durch mehrere vertikal verlaufende Querspante und mehrere horizontal verlaufende Längsspante versteift ist, wobei die Außenhaut mehrere Fenster aufweist, die jeweils einen Fensterrahmen umfassen, wobei wenigstens ein Querspant durch den Fensterrahmen eines Fensters verläuft, so dass der Querspant in einem oberen Abschnitt des Fensterrahmens und in einem unteren Abschnitt des Fensterrahmens endet.

Vorzugsweise weist die erfindungsgemäße Rumpfstruktur als ein weiteres Merkmal oder, soweit dies technisch sinnvoll ist, als weitere Merkmale auf, dass
- der Übergang zwischen dem Querspant und dem Fensterrahmen eine Verzweigung des Querspantes aufweist, so dass der Querspant und der Fensterrahmen an der Verzweigung ein Dreieck bilden
- die Höhe des Querspantes der Höhe des Fensterrahmens entspricht;
- von dem Fensterrahmen wenigstens vier Schrägspante mit einer vorgegebenen Länge ausgehen.

Dabei ist insbesondere von Vorteil, dass die Spante zwischen den Fenstern entfallen. Damit kann der Zwischenraum zwischen zwei benachbarten Fenstern anderweitig genutzt werden, beispielsweise für das Verlegen von Versorgungsleitungen und

Leitungen für die Klimaanlage. Ferner vereinfacht sich die Fertigung, und es kann gegebenenfalls ein niedrigeres Baugewicht erreicht werden.

Weitere Merkmale und Vorteile der Erfindung ergeben sich aus der nachfolgenden Beschreibung von bevorzugten Ausführungsbeispielen, bei der auf die beigefügte Zeichnung mit einer Figur Bezug genommen wird.

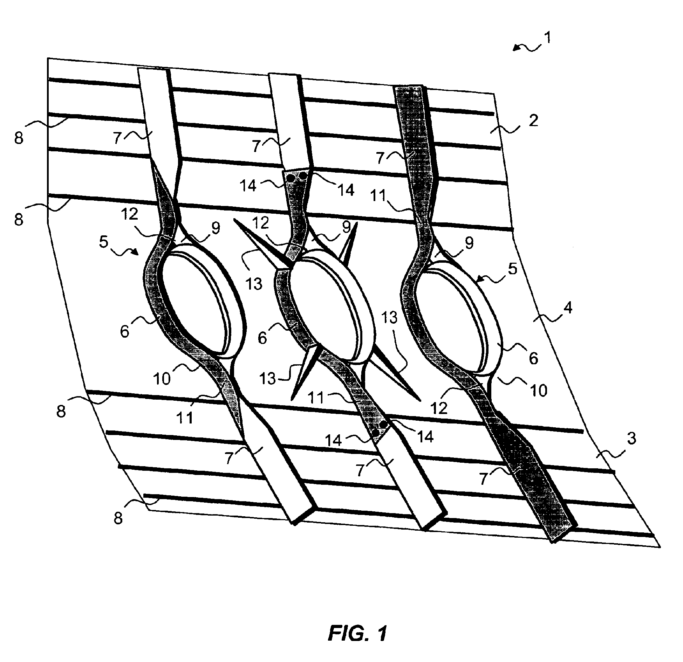

Die einzige Fig. 1 zeigt in perspektivischer Ansicht einen Abschnitt der Außenhaut eines Flugzeugrumpfes mit mehreren Fenstern bei erfindungsgemäßer Führung der Spanten.

In Fig. 1 ist die Rumpfstruktur eines Flugzeugs mit einer Außenhaut 1 gezeigt. Diese Rumpfstruktur des Flugzeugs kann aus mehreren Segmenten oder Bauteilen zusammengesetzt sein. Von den Bauteilen sind ein oberes Schalenbauteil 2, ein unteres Schalenbauteil 3 und ein Fenstersegment 4 gezeigt. In dem Fenstersegment 4 sind mehrere Fenster 5 angeordnet, die jeweils einen Fensterrahmen 6 umfassen.

Beim Zusammenbau des Flugzeugs wird auf das untere Schalenbauteil 3 das Fenstersegment 4 gesetzt, und auf dieses wiederum wird das obere Schalenbauteil 2 gesetzt. Die Bauteile 2, 3, 4 werden durch mehrere vertikal verlaufende Querspante 7 miteinander verbunden. Wie erwähnt dienen die Querspante 7 zum Fixieren der Bauteile 2, 3, 4 aneinander und außerdem zur Aufnahme von Lastkräften, die auf die Außenhaut 1 des Flugzeugs einwirken. Neben den Querspanten 7 wird die Außenhaut des Flugzeugs durch mehrere horizontal verlaufende Längsspante 8 versteift.

Während im Stand der Technik die Querspante 7 seitlich an den Fenstern 5 vorbeigeführt werden, damit die mechanische Belastbarkeit des Rumpfes nicht durch Unterbrechungen der Spante in Höhe der Fenster beeinträchtig wird, wird erfindungsgemäß vorgeschlagen, die Spante 7 durch die Fensterrahmen 6 zu führen, so dass die Fensterrahmen 6 in den Spanten 7 integriert sind. Im einzelnen bedeutet dies, dass ein Querspant 7, der von dem oberen Schalenbauteil 2 kommt, in einem oberen Abschnitt 9 des Fensterrahmens 6 endet. Ebenso endet ein von dem unteren Schalenbauteil 3 kommender Spant 7 in einem unteren Abschnitt 10 des Fensterrahmens 6. Auf diese Art verläuft der Spant 7, der das obere Schalenbauteil 2 und das untere Schalenbauteil 3 unter Einbindung des Fenstersegments 4 miteinander verbindet, durch den Fensterrahmen 6 eines Fensters 5.

Insbesondere weist der Übergang zwischen dem Querspant 7 und dem Fensterrahmen 6 eine Verzweigung 11 des Querspantes auf. Die beiden Schenkel der Verzweigung 11 schmiegen sich dann an den Fensterrahmen 6 an, so dass von den Schenkeln der Verzweigung 11 und dem oberen Abschnitt des Fensterrahmens 9 bzw. dem unteren Abschnitt des Fensterrahmens 10 ein Dreieck 12 gebildet wird. Auf diese Weise erreicht man, dass von den Spanten 7 ausgeübte Kräfte optimal in den Fensterrahmen eingeleitet werden können. Die genaue Formgebung des Übergangs zwischen dem Spant 7 in Höhe des oberen Schalenbauteils 2 bzw. unteren Schalenbauteils 3 und dem Fensterrahmen 6 kann in einem bionischen Optimierungsprozess ermittelt werden.

Es versteht sich, dass die Höhe des Querspantes 7 über der Außenhaut 1 der Höhe des Fensterrahmens 6 über der Außenhaut entspricht. Dies bedeutet nicht zwangsläufig, dass die von beiden Elementen gleich oder identisch sein muss. Es muss nur sichergestellt werden, dass die von dem Spant 7 und dem Fensterrahmen aufzunehmenden Kräfte gleich sind. Bei der Festlegung der Höhe von Spant und Fensterrahmen kann auch die Dicke des Fensterrahmens 6 bzw. des Spants 7 einfließen.

Sollte die Dicke insbesondere des Fensterrahmens 6 nicht beliebig vergrößert und damit nicht an die Belastbarkeit des Spants 7 angepasst werden können, so sind in einer speziellen Ausführungsform der Erfindung zur Unterstützung des Fensterrahmens 6 schräg verlaufende Spante, also Schrägspante bzw. Versteifungsstreben 13 vorgesehen. Diese Schrägspante 13 tragen auch zur Lastabtragung von Schublasten bei. Ihre Länge hängt von den aufzunehmenden Lasten sowie der Dicke der Außenhaut unter dem Schrägspant ab, und dies gilt auch für die Form und Breite des Schrägspants, die ebenfalls von diesen Parametern abhängen. In der Darstellung in Fig. 1 sind bei dem mittleren Fenster als Beispiel die Schrägspante 13 spitz zulaufend gezeigt. Es versteht sich, dass auch die Anzahl und Positionierung der Schrägspante 13 in Bezug auf den Fensterrahmen von den jeweiligen Bedingungen der Krafteinleitung abhängen und daher sehr wohl mehr als vier Schrägspante 13 vorgesehen werden können. Alle drei Parameter Anzahl, Dicke, Positionierung können ebenfalls Gegenstand bionischer Optimierungsprozesse sein.

Die Erfindung ist nicht auf ein bestimmtes Material für die Schalenbauteile 2, 3 und das Fenstersegment beschränkt. So kann das Material für die Bauteile Aluminium sein, dann werden die Spanten 7, 8 und die Fensterrahmen 6 vorzugsweise durch Nietverbindungen fest mit den Schalenbauteilen 2 und 3 verbunden. Das Material kann aber ebenso gut faserverstärkter Kunststoff wie kohlefaserverstärkter Kunststoff CFK oder glasfaserverstärkter Kunststoff GFK sein. In diesem Fall werden die Spante 7, 8 vorzugsweise auf die Schalenbauteile 2, 3 aufgeklebt. Dem Fachmann sind weitere Varianten geläufig.

Je nach verwendetem Material unterscheiden sich die Verbindungsarten bei Übergängen zwischen einzelnen Abschnitten der Querspante 7. In Fig. 1 sind drei verschiedene Übergangsarten angedeutet. Der schräge Übergang zwischen dem Spant 7 auf dem Fenstersegment 4 und dem Spantabschnitt auf dem oberen Schalenbauteil 2 bzw. dem unteren Schalenbauteil 4 bei dem ersten Beispiel eines Fensters links in Fig. 1 wird gewählt, wenn die Spante 7 beispielsweise aus Aluminium bestehen und die Spantabschnitte miteinander verschweißt werden. Bei dem mittleren Fenster in Fig. 1 ist der Spant 7 auf dem Fenstersegment 4 mit dem Spantabschnitt auf dem oberen Schalenbauteil 2 bzw. dem unteren Schalenbauteil 4 mit Nieten 14 vernietet. Diese Technik wird bevorzugt eingesetzt, wenn die Spante 7 aus faserverstärkten Kunststoffen bestehen. Darüber hinaus kann der Spant 7 aus zwei parallelen Einzelteilen ausgeführt werden und als Ganzes auf die Außenhaut aufgesetzt werden. Dabei wird der Fensterrahmen 6 an einer Stelle zwischen den beiden parallelen Einzelteilen des Spantes gebildet, wie es in dem rechten Beispiel eines Fensters in Fig. 1 angedeutet ist. Auch diese Technik eignet sich besonders für Spante aus faserverstärktem Kunststoff.

Wenn größere Flugzeuge mehrere übereinander angeordnete Passagierdecks mit entsprechenden Fensterreihen aufweisen, kann die Erfindung vorteilhaft auf alle Fensterreihen angewendet werden.

Es ist ein besonderer Vorteil der Erfindung, dass durch den Wegfall der Spante 7 zwischen den Fenstern der gewonnene Platz für das Verlegen von Versorgungsleitungen verwendet werden kann. So ist es beispielsweise möglich, bei zwei Versorgungsrohren, die im Stand der Technik durch einen Spant voneinander getrennt sind, die Isolierung gemeinsam für beide Versorgungsrohre zu nutzen, was weitere vielfältige Vorteile mit sich bringt. Oder der Querschnitt eines Versorgungsrohres kann vergrößert werden, so dass ein größerer Volumenfluss erreicht wird, was beispielsweise insbesondere für die Ventilation von Vorteil ist.

Aus dem obigen ergibt sich unmittelbar, dass die Erfindung auch nicht auf einen Spant pro Fenster beschränkt ist. Es ist selbstverständlich möglich, dass zwei nebeneinander verlaufende Spante in dem Fensterrahmen ein und desselben Fensters enden bzw. diesen in ihren Verlauf integrieren. Das hat somit zur Folge, dass man nicht länger beschränkt ist in Bezug auf die maximale Breite der Fenster, die im Stand der Technik vorgegeben ist durch den Abstand zweier benachbarter Spante. Stattdessen kann die Fensterbreite unabhängig von dem Verlauf der Spante gewählt werden, und die Breite des Fensters kann beispielsweise 2 oder sogar 3 Spantabstände betragen.

### Bezugszeichen

- 1: Außenhaut
- 2: oberes Schalenbauteil
- 3: unteres Schalenbauteil
- 4: Fenstersegment
- 5: Fenster
- 6: Fensterrahmen
- 7: Querspant
- 8: Längsspant
- 9: oberer Abschnitt des Fensterrahmens
- 10: unterer Abschnitt des Fensterrahmens
- 11: Verzweigung von Querspant
- 12: Dreieck
- 13: Schrägspant, Versteifungsstrebe
- 14: Niete

## Patentansprüche

1. Rumpfstruktur eines Flugzeugs mit einer Außenhaut (1), die durch mehrere vertikal verlaufende Querspante (7) und mehrere horizontal verlaufende Längsspante (8) versteift ist,
wobei die Außenhaut (1) mehrere Fenster (5) aufweist, die jeweils einen Fensterrahmen (6) umfassen,
wobei
wenigstens ein Querspant (7) durch den Fensterrahmen (6) eines Fensters (5) verläuft, so dass der Querspant in einem oberen Abschnitt (9) des Fensterrahmens (6) und in einem unteren Abschnitt (10) des Fensterrahmens (6) endet,
wobei
der Übergang zwischen dem Querspant (7) und dem Fensterrahmen (6) eine Verzweigung (11) des Querspantes aufweist, so dass der Querspant (7) und der Fensterrahmen (6) an der Verzweigung (11) ein Dreieck (12) bilden,
**dadurch gekennzeichnet, dass**
von dem Fensterrahmen (6) wenigstens vier Versteifungsstreben (13) mit einer vorgegebenen Länge ausgehen.

2. Rumpfstruktur nach Anspruch 1, **dadurch gekennzeichnet, dass** die Höhe des Querspantes (7) der Höhe des Fensterrahmens (6) entspricht.

## Claims

1. Fuselage structure of an aircraft comprising an outer skin (1) which is reinforced by several vertically aligned transverse ribs (7) and several horizontally aligned longitudinal ribs (8),
wherein the outer skin (1) comprises several windows (5) which each comprise a window frame (6),
wherein
at least one transverse rib (7) runs through the window frame (6) of a window (5) so that the transverse rib ends in an upper section (9) of the window frame (6) and in a lower section (10) of the window frame (6),
wherein
the transition between the transverse rib (7) and the window frame (6) comprises a branch (11) of the transverse rib so that the transverse rib (7) and the window frame (6) form a triangle (12) at the branch (11),
**characterized in that**
at least four inclined braces (13) extend with a predetermined length from the window frame (6).

2. Fuselage structure according to claim 1, **characterized in that** the height of the transverse rib (7) corresponds to the height of the window frame (6).

## Revendications

1. Structure de fuselage d'un avion comportant une enveloppe extérieure (1), qui est renforcée par plusieurs membrures transversales (7) s'étendant verticalement et par plusieurs membrures longitudinales (8) s'étendant horizontalement,
dans lequel l'enveloppe extérieure (1) présente plusieurs hublots (5), qui comportent respectivement un cadre de hublot (6),
dans lequel
au moins une membrure transversale (7) s'étend à travers le cadre de hublot (6) d'un hublot (5) de sorte que la membrure transversale se termine dans une section supérieure (9) du cadre de hublot (6) et dans une section inférieure (10) du cadre de hublot (6),
dans lequel
le passage entre la membrure transversale (7) et le cadre de hublot (6) présente un embranchement (11) de la membrure transversale de sorte que la membrure transversale (7) et le cadre de hublot (6) forment au niveau de l'embranchement (11) un triangle (12),
**caractérisée en ce**
**qu'**au moins quatre traverses de renforcement (13) présentant une longueur prédéfinie partent du cadre de hublot (6).

2. Structure de fuselage selon la revendication 1, **caractérisée en ce que** la hauteur de la membrure transversale (7) correspond à la hauteur du cadre de hublot (6).
